Europäisches Patentamt

European Patent Office

Office européen des brevets

(11) Publication number: **0 281 228**

**A1**

# (12) EUROPEAN PATENT APPLICATION

(21) Application number: 88300479.8

(22) Date of filing: 21.01.88

(51) Int. Cl.4: **F16J 15/12** , B29C 67/18 , B29C 69/00

(30) Priority: 28.01.87 GB 8701804

(43) Date of publication of application:
07.09.88 Bulletin 88/36

(84) Designated Contracting States:
DE ES FR GB IT SE

(71) Applicant: DOW CORNING CORPORATION
3901 S. Saginaw Road
Midland Michigan 48640(US)

(72) Inventor: Bassani, Giovanni
Avenue de la Ramée 8
B-1410 Waterloo(BE)

(74) Representative: Bullows, Michael
Dow Corning Limited Cardiff Road
Barry South Glamorgan CF6 7YL Wales(GB).

(54) **Production of gaskets.**

(57) Gaskets for use, for example in internal combustion engines, are made by a method including the steps of bending a strip (10) comprising a support (12) enclosed within a sheath (14) of silicone rubber to a desired configuration with its end portions (20, 22) adjacent, trimming end portions of the sheath (14) from the strip (10), joining the exposed ends (20, 22) of the support, applying a deposit of vulcanisable material on the joined ends (20, 22) of the support (12) and curing the deposit to provide an endless coating of elastomeric material on the support (12).

Fig.4.

## PRODUCTION OF GASKETS

This invention relates to the production of gaskets and particularly to the manufacture of gaskets for use in internal combustion engines.

Gaskets are used in production and repair of a wide variety of articles in which adjacent parts are held together and it is desired to achieve a seal between the parts, for example to prevent escape of liquids or gases enclosed by the joined parts. The parts to be joined may be, for example, of metal and may have mating surfaces which are substantially planar or which are of more complex shape. Gaskets commonly used in the production and repair of, for example, internal combustion engines are generally sufficiently compressible to accommodate variances and irregularities between elements but may be cast in situ prior to bringing the parts together in mating relationship.

Known methods of manufacturing preformed gaskets generally involve stamping the gasket from a sheet of suitable material, possibly comprising a laminate of several layers, or moulding the shaped gasket from suitable synthetic material for example a nitrile rubber. The stamping method is particularly suited to production of gaskets of flat material whereas the moulding methods can be used for a variety of shapes, but require the use of pressure moulds e.g. for injection moulding which are expensive and uneconomic for production of small quantities of gaskets. Gaskets may be cast in situ using fluid e.g. curable gasket forming material. Such gaskets are suitable for various applications but require an accuracy of uniform deposition on the workpieces by the operator which is not always easy to achieve in practice, particularly under repetitive production line conditions.

It is desirable to provide a production method whereby gaskets of a variety of shapes and sizes may be reproducibly produced to an acceptably uniform standard in small or large batches without resort to complex or expensive equipment.

It is one object of the present invention to provide an improved method of producing gaskets, for example gaskets suitable for use in the manufacture and repair of automotive engines.

The present invention provides in one of its aspects a method of making a gasket comprising the steps of

(i) bending a strip which comprises a support enclosed within a sheath of desired cross section of a resilient, cured, silicone rubber into a desired configuration with its end portions adjacent each other;

(ii) exposing end portions of the support by removing portions of the sheath from the end portions of the strip;

(iii) fastening together the end portions of the support;

(iv) applying to the fastened end portions of the support between end portions of the sheath a deposit of curable composition, and

(v) shaping and curing the deposit to provide a cured rubber splice between the adjacent end portions of the sheath to complete an endless coating of cured elastomeric material on the support.

In a strip used in a method according to the invention, the support is employed to confer a measure of dimentional integrity to the gasket and to contribute to ease of handling of the gasket both during its manufacture and installation. The support may also serve to assist in limiting relative movement of approach of the elements separated by it during use. Conveniently, the support is of a ductile material which is not unduly springy, so that the strip may be easily bent and so that the strip may retain the shape into which it has been bent. Preferably the support comprises a metal wire of untempered steel, iron, aluminium alloy, brass or copper. The wire may be of a material treated to be corrosion resistant e.g. galvanised steel or tinned copper.

In a strip used in a method according to the invention the sheath of silicone rubber may have a hardness in the range 50-80 Shore A and preferably has a hardness of about 70 Shore A. The sheath may be formed on the support by a procedure in which the compound which is to provide the sheath is extruded from a nozzle through which the support is drawn and the strip heated to cure the compound. The heating may be carried out for example in a hot air chamber, a steam chamber, a salt bath or a fluidised bed containing balatini. Such procedures and heating methods are well known in the art as are the compounds suitable for such procedures. Suitable compounds include those curable by heating to provide a non-foamed elastomer, and may comprise for example a polydiorganosiloxane convertible to a solid elastic state, a filler and a curing agent or catalyst for example an organic peroxide or perester or a platinum catalyst.

Suitable polydiorganosiloxanes include those in which the organic substituents of the polydiorganosiloxane are selected from monovalent hydrocarbon groups and monovalent fluorinated organic groups, at least 40% of the total substituent groups being methyl. Groups having aliphatic unsaturation may be present in a proportion of not more than about 2% of the total number of substituents. Suitably the ratio of organic substituents to silicon atoms in the polydiorganosiloxane is in the range 1.98 to 2.01. Such polydiorganosiloxanes are well known in the silicone rubber art and they may be homopolymers or copolymers and vary in consistency from high viscosity liquids to nonflowing gums. Preferred polydiorganosiloxanes are those in which the organic substituents are methyl groups and, optionally, one or both of phenyl and vinyl groups, for example, polydimethylsiloxanes, copolymers of dimethylsiloxane, diphenylsiloxane and trimethylsiloxane units, copolymers of trimethylsiloxane, methylphenylsiloxane and dimethylvinylsiloxane units, copolymers of dimethylsiloxane, methylphenylsiloxane and dimethylvinylsiloxane units, and methyl (trifluoropropyl)polysiloxanes. Vinyl groups are preferably present to an extent of not more than about 1% of the total number of substituents. Phenyl groups are preferably present to an extent of not more than about 5% of the total number of substituents.

The polydiorganosiloxane may comprise a single polymeric species or a mixture of two or more different species. For example, it may comprise a polydimethylsiloxane free of vinyl groups, or with vinyl groups attached to terminal silicon atoms, together with a polydimethylsiloxane having a proportion of vinyl groups attached to non-terminal silicon atoms.

Suitable fillers include those known in the silicone rubber art, for example, reinforcing and non-reinforcing silicas such as fume silica, precipitated silica, crushed quartz and diatomaceous earth, titanium dioxide, calcium carbonate, magnesium oxide and aluminium oxide. Preferred materials are the reinforcing silicas which have a surface area of at least $50m^2/g$ for example up to $300m^2/g$ or higher. They may be untreated or treated, by a pretreatment or by an in situ treatment, using for example various silanes, silazanes or siloxanes to modify their surface properties as known in the art.

The proportion of filler present is in accordance with the hardness and tensile strength required in the gasket produced in a method according to the invention. In general a hardness in the range from about 50 to about 80 Shore A is desirable, and for such hardnesses from about 20 to about 35% of the preferred filler by weight of the composition is generally appropriate.

Curing agents which may be employed are the free radical generating organic peroxides and peroxy esters, for example benzoyl peroxide, 2,4-dichlorobenzoyl peroxide, monochlorobenzoyl peroxide and mixtures thereof with for example di-tertiary butyl peroxide, t-butyl cumyl peroxide, dicumyl peroxide, tertiary butyl peracetate, tertiary butyl perbenzoate and 2,5-bis (tertiary butyl peroxy)-2,5-dimethylohexane.

The compound may contain other ingredients if desired, for example heat stability additives (e.g. rare earth oxides or hydroxides) and processing aids.

The cross section of the sheath of a strip for use in a method according to the invention is selected in accordance with the intended application of the gasket, and may present e.g. flat, curved or ribbed surfaces towards the surfaces to be mated against it. For many purposes it is acceptable for the strip to be of circular cross section. We prefer that the sheath comprises a comparatively thin layer on the support and an integral portion to one side or both sides of the circular portion capable of providing ample filling of the joint without requiring the thickness of the circular portion to be very large. Preferably, the strip has a cross section at least a portion of which is circular and preferably the support is located at the centre of the circular portion.

In a method according to the invention the strip is bent into the desired configuration by any desired means, and this step in the process may be conducted manually or by use of, for example, a suitable bending press.

In a method according to the invention the end portions of the support may be fastened together by any suitable means. Preferably they are fastened together by welding, brazing or soldering. If desired, end portions of the support may be trimmed, for example to form a butt joint between their ends before they are joined together.

In a method according to the curable composition applied to the fastened end portions of the support element is preferably a silicone composition. Materials which cure at room temperature are not generally preferred as the time required for them to cure to a tough condition is relatively long. We prefer to use a composition curable by heating to provide a silicone rubber of a hardness in the range 50 to 80 Shore A. Suitable compositions are well known in the art and may comprise materials as referred to above. The silicone composition may be shaped and cured by a moulding procedure in which the deposit is enclosed in a heated mould. The deposit employed is sufficiently large that when shaped and cured it joins together exposed end portions of the sheath. The deposite may be shaped to the same cross section as the sheath so that the completed coating on the support exhibits a constant cross section throughout the gasket.

By use of a method according to the invention it is possible to provide gaskets of desired uniform section and configuration without resort to expensive moulding equipment or procedures. For example, the strip with a uniform coating of silicone rubber throughout the shape of the gasket may be bent easily into a configuration which matches the shape of mating surfaces of a cylinder block and sump of an internal combustion engine, and thus has a "three dimensional" configuration, to provide a gasket. A method according to the invention may be employed in production of small or large quantities of gaskets of various shapes without major capital expense.

There now follows a description to be read with the acompanying drawings of a method of making an example gasket which method is according to the invention and illustrative thereof.

In the drawings:

Figure 1 is a view in cross section of a strip for use in a method according to the invention.

Figure 2 is a view of end portions of the strip preparatory to cutting the strip to desired length;

Figure 3 is a view of the strip after end portions of the support have been joined together, and

Figure 4 is a diagrammatic view of the example gasket.

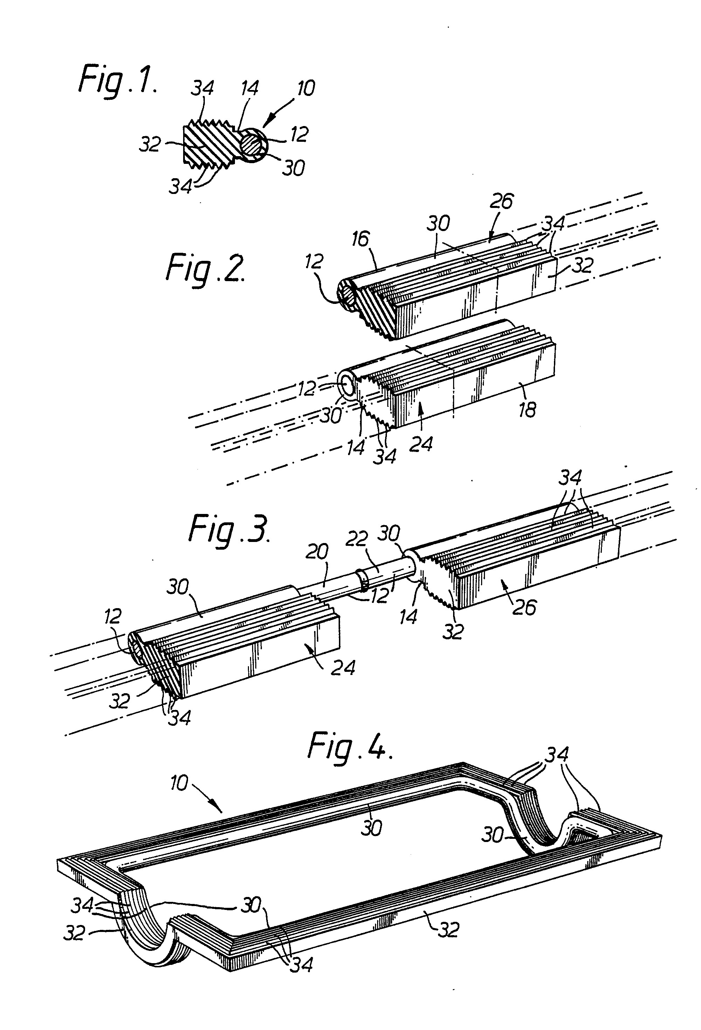

The example gasket (Figure 4) was made by use of a strip (10) comprising a support provided by a wire (12) of circular cross section enclosed within a uniform sheath (14) of a resilient, cured, silicone rubber. The sheath (14) comprised a comparatively thin layer portion (30) having a circular surface and an integral portion (32) of substantially rectangular cross section. The portion (32) was provided with a series of serrations (34). The support wire (12) was located at the center of the part circular portion (30). The silicone rubber was an elastomer of hardness 70 shore A formed from a compound comprising 100 parts by weight of a blend of dimethylvinyl containing polysiloxane compounded with silica, plasticiser, carbon black and 1.5 parts 2,4-dichlorobenzoyl peroxide. The strip was formed by extruding the compound onto the wire and heating the compound in a hot air vulcanising unit at a temperature of about 300°C for about 1.5 minutes. The wire was of galvanised steel and had a diameter of about 1.22 mm. The circular portion (30) of the sheath (14) and an overall diameter of about 3mm and the portion 32 was about 4mm thick. The strip was about 9mm wide.

When carrying out the illustrative method to make the example gasket the strip was bent by hand into a configuration which matched the shape of mating surfaces of a cylinder block and sump of an internal combustion engine. Overlapping end portions (16, 18) of the strip (Figure 2) were removed and end portions (20, 22) of the wire (12) were exposed by removing material from end portions (24, 26) of the sheath (14). The end portions (20, 22) of the wire were fastened together by a weld (Figure 3). A deposit of curable silicone composition was applied to the fastened end portions of the wire. The curable silicone composition was the same as used to form the sheath. The curable silicone composition was shaped and cured by a moulding procedure in which the deposit was enclosed in a heated mould for a required period of time to cure the composition. In this way, the deposit was shaped and cured to provide a cured silicone rubber splice having a hardness of 70 Shore A bonded between the adjacent end portions of the sheath to complete an endless coating of cured silicone rubber on the wire.

## Claims

1. A method of making a gasket comprising the steps of

(i) bending a strip which comprises a support enclosed within a sheath of desired cross section of a resilient, cured, silicone rubber into a desired configuration with its end portions adjacent each other;

(ii) exposing end portions of the support by removing portions of the sheath from the end portions of the strip;

(iii) fastening together the end portions of the support;

(iv) applying to the fastened end portions of the support between end portions of the sheath a deposit of curable composition, and

(v) shaping and curing the deposit to provide a cured rubber splice between the adjacent end portions of the sheath to complete and endless coating of cured elastomeric material on the support.

2. A method according to Claim 1 wherein the support comprises a metal wire of iron, aluminium or copper.

3. A method according to Claim 2 wherein the end portions of the support are fastened together by soldering, welding or brazing.

4. A method according to any one of the preceding claims wherein the sheath is of a silicone rubber having a hardness in the range 50 to 80 Shore A.

5. A method according to any one of the preceding claims wherein the sheath has a cross section at least a portion of which is circular and the suppoort is located at the centre of the circular portion.

6. A method according to any one of the preceding claims wherein the strip is bent into a configuration which matches the shape of mating surfaces of a cylinder block and sump of an internal combustion engine.

7. A method according to any one of the preceding claims wherein the curable composition comprises a composition curable by heating to provide a silicone rubber of a hardness in the range 50 to 80 Shore A.

8. A method according to any one of the preceding claims wherein the curable composition is shaped and cured by a moulding procedure in which the deposit is enclosed in a heated mould.

9. A gasket formed by a method according to any one of the preceding claims.

10. An internal combustion engine having a gasket according to Claim 9.

Fig.1.

Fig.2.

Fig.3.

Fig.4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-1 400 506 (J. MULLER)<br>* Whole document *<br>--- | 1-3 | F 16 J 15/12<br>B 29 C 67/18<br>B 29 C 69/00 |
| A | US-A-2 936 518 (CLIFTON & PAITCHELL)<br>* Figures; column 2, lines 19-61 *<br>--- | 1-3,5 | |
| A | EP-A-0 084 498 (S.A. D'EXPLOITATION DES JOINTS MEILLOR)<br>* Claims 3-6 *<br>--- | 1 | |
| A | GB-A-2 130 522 (SAIPEM S.p.A)<br>* Abstract; figures *<br>--- | 1,3 | |
| A | US-A-4 597 583 (INCIONG & MISZCZAK)<br>* Figures *<br>--- | 5,6 | |
| A | US-A-4 026 565 (JELINEK)<br>* Figures *<br>--- | 6 | |
| A | GB-A-2 083 575 (GENERAL CONNECTORS CO.)<br>* Abstract *<br>----- | 4,7,8 | **TECHNICAL FIELDS SEARCHED (Int. Cl.4)**<br><br>F 16 J<br>B 29 C<br>B 29 H |

The present search report has been drawn up for all claims

| Place of search | Date of completion of the search | Examiner |
|---|---|---|
| THE HAGUE | 10-05-1988 | NARMINIO A. |